(19) Europäisches Patentamt
European Patent Office
Office européen des brevets

(11) EP 4 130 185 B1

(12) **EUROPEAN PATENT SPECIFICATION**

(45) Date of publication and mention of the grant of the patent:
**23.10.2024 Bulletin 2024/43**

(21) Application number: **21776763.1**

(22) Date of filing: **23.03.2021**

(51) International Patent Classification (IPC):
***C09J 11/06*** *(2006.01)* ***C09J 133/00*** *(2006.01)*
***C09J 7/38*** *(2018.01)* ***C08F 8/14*** *(2006.01)*
***C08F 220/18*** *(2006.01)* ***C08G 18/00*** *(2006.01)*
***C08G 18/76*** *(2006.01)* ***C08G 18/80*** *(2006.01)*
***C08K 5/00*** *(2006.01)* ***C09J 7/30*** *(2018.01)*
***C08G 18/62*** *(2006.01)*

(52) Cooperative Patent Classification (CPC):
(C-Sets available)
**C09J 7/30; C08F 8/14; C08F 220/1808; C08G 18/003; C08G 18/6229; C08G 18/7621; C08G 18/8029;** C08K 3/016; C08K 5/0066; C09J 2203/346; C09J 2301/408; C09J 2433/00

(Cont.)

(86) International application number:
**PCT/JP2021/011948**

(87) International publication number:
**WO 2021/193615 (30.09.2021 Gazette 2021/39)**

(54) **ADHESIVE COMPOSITION, ADHESIVE AGENT, ADHESIVE TAPE AND AIRTIGHT WATERPROOF ADHESIVE TAPE**

KLEBSTOFFZUSAMMENSETZUNG, KLEBSTOFF, KLEBEBAND UND KLEBEBAND FÜR LUFT- UND WASSERDICHTE ABDICHTUNGEN

COMPOSITION ADHÉSIVE, AGENT ADHÉSIF, RUBAN ADHÉSIF, ET RUBAN ADHÉSIF POUR ASSURER L'ÉTANCHÉITÉ À L'AIR ET À L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2020 JP 2020057380**

(43) Date of publication of application:
**08.02.2023 Bulletin 2023/06**

(73) Proprietor: **Mitsubishi Chemical Corporation**
**Chiyoda-ku**
**Tokyo 100-8251 (JP)**

(72) Inventor: **ISEKI Masashi**
**Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**WO-A1-2011/111534**
**WO-A1-2019/113781**
**JP-A- 2008 024 827**
**JP-A- 2012 167 160**
**JP-A- 2013 177 510**
**US-A1- 2010 279 491**
**US-A1- 2020 002 579**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/14, C08F 220/1808;**
**C08F 220/1808, C08F 220/1804, C08F 220/14,**
**C08F 220/06, C08F 220/20**

## Description

### Technical Field

The present disclosure relates to an adhesive composition. More specifically, the present disclosure relates to an adhesive composition that has high flame retardancy due to containing a flame retardant, while also having both excellent adhesiveness and excellent holding force, which typically significantly decreases in an adhesive tape to which a flame retardant is added, and also relates to an adhesive agent, an adhesive tape, and an airtight waterproof adhesive tape obtained using the adhesive composition.

### Background Art

Conventionally, it has been considered imparting flame retardancy to a flame retardant adhesive tape by adding a flame retardant to an adhesive layer. For example, PTL 1 discloses a flame retardant adhesive tape for electrical insulation that is excellent in flame retardancy, adhesive properties, and suppressing carbonization dielectric breakdown due to an isocyanate crosslinking agent being used as a crosslinking agent for an acrylic resin and a phosphoric acid ester amide flame retardant being added to a flame retardant. Epoxy compounds are also described as examples of the crosslinking agent. PTL 2 discloses an adhesive composition comprising an acrylic resin that contains a (meth)acrylic acid monomer unit and a hydroxyl group-containing monomer unit; an isocyanate crosslinking agent; and a flame retardant.

### Citation List

### Patent Literature

PTL 1: JP-A-2008-24827

PTL 2: JP-A-2013-177510

### Summary

### Technical Problem

However, the adhesive tape disclosed in PTL 1 described above is for electrical insulation, and its adhesiveness is insufficient for construction uses in which stronger adhesiveness is required.

Also, although adhesiveness can be improved by reducing the amount of the crosslinking agent, the holding force typically significantly decreases when a flame retardant is added, and there is demand for an adhesive tape that is excellent in both adhesiveness and the holding force while having high flame retardancy due to containing a flame retardant.

Under the above circumstances, the present disclosure provides an adhesive composition that is excellent in both adhesiveness and the holding force while having high flame retardancy by using an epoxy crosslinking agent and an isocyanate crosslinking agent in combination as crosslinking agents for a specific acrylic resin.

On the other hand, an acrylic adhesive composition is useful for airtight waterproof adhesive tapes, which are used for the purpose of achieving at least either airtightness or waterproofness at a gap between a structure of a house and a member or between members (mainly around sash openings and joint portions such as overlapped portions of moisture-permeable waterproof sheets), for example, in line with the enforcement of laws relating to quality promotion of waterproof airtight houses (houses excellent in waterproofness or airtightness) and energy saving through improvement in airtightness and thermal insulation of houses. Such an airtight waterproof adhesive tape is required to strongly adhere to an adherend having relatively high polarity such as an aluminum sash, an adherend having relatively low polarity such as a moisture-permeable waterproof sheet, and a rough surface such as an OSB (Oriented Strand Board: wooden plate obtained by stacking oriented thin wood chips and compressing the chips at a high temperature using an adhesive agent), have a strong holding force so that a moisture-permeable waterproof sheet or the like fixed using the tape is not displaced, and further have high flame retardancy.

### Solution to Problem

In view of the foregoing, the inventor of the present disclosure carried out intensive studies and found that it is possible to obtain an adhesive composition that is excellent in both adhesiveness and the holding force while having

high flame retardancy, and an adhesive agent, an adhesive tape, and an airtight waterproof adhesive tape using the adhesive composition, if an adhesive composition in which an acrylic resin is used contains a (meth)acrylic acid monomer and a hydroxyl group-containing monomer as copolymerization components constituting the acrylic resin, and also contains both an epoxy crosslinking agent and an isocyanate crosslinking agent together with a flame retardant.

That is, the gist of the present disclosure is as follows.

<1> An adhesive composition including: an acrylic resin (A) that contains a (meth)acrylic acid monomer (a1) unit and a hydroxyl group-containing monomer (a2) unit; an epoxy crosslinking agent (b1); an isocyanate crosslinking agent (b2); and a flame retardant (C).

<2> The adhesive composition according to <1>, wherein the acrylic resin (A) contains a terminal end carboxy group-containing monomer (a3) unit represented by the following general formula (1),

$$-(CH_2-\underset{\displaystyle CO-O-(R^2-COO-)_nH}{\underset{|}{C}R^1})- \quad \cdots \quad (1)$$

where $R^1$ represents hydrogen or a methyl group, $R^2$ represents a divalent saturated aliphatic group, unsaturated aliphatic group, aromatic group, saturated alicyclic group, or unsaturated alicyclic hydrocarbon group, and n represents a positive number of 1 or more.

<3> The adhesive composition according to <2>, wherein the acrylic resin (A) contains the following monomer units (a1) to (a4):

(a1) 0.1 to 5 wt.% of the (meth)acrylic acid monomer unit;
(a2) 0.01 to 5 wt.% of the hydroxyl group-containing monomer unit;
(a3) 1 to 20 wt.% of the terminal end carboxy group-containing monomer unit represented by the general formula (1); and
(a4) 55 to 97 wt.% of a (meth)acrylate monomer unit having an alkyl group having 4 to 24 carbon atoms.

<4> The adhesive composition according to any one of <1> to <3>, wherein the flame retardant (C) is contained in an amount of 1 to 100 parts by weight relative to 100 parts by weight of the acrylic resin (A).

<5> An adhesive agent obtained by crosslinking the adhesive composition according to any one of <1> to <4>.

<6> An adhesive tape including a substrate and the adhesive agent according to <5> applied to the substrate.

<7> An airtight waterproof adhesive tape constituted by the adhesive tape according to <6>.

Advantageous Effects

An adhesive composition according to the present disclosure contains the acrylic resin (A) that contains the (meth)acrylic acid monomer (a1) unit and the hydroxyl group-containing monomer (a2) unit, the epoxy crosslinking agent (b1), the isocyanate crosslinking agent (b2), and the flame retardant (C). In the case of an adhesive composition that contains either the epoxy crosslinking agent (b1) or the isocyanate crosslinking agent (b2) as a crosslinking agent, improvement in flame retardancy is typically limited even when a flame retardant is added to the adhesive composition, and the adhesive composition cannot satisfy the flame retardancy specified in the European construction material fire safety standard EN13501-1 (EN standard). In contrast, in the case of the adhesive composition according to the present disclosure, the effect of improving flame retardancy is significant and the adhesive composition can satisfy the flame retardancy specified in the EN standard, and when compared with the case where a flame retardant is added to an adhesive composition containing either one of the crosslinking agents, flame retardancy that is significantly higher than expected can be imparted to the adhesive composition according to the present disclosure. Moreover, although a holding force of an adhesive tape typically significantly decreases when a flame retardant is added, the adhesive composition according to the present disclosure is excellent in both adhesiveness and the holding force while having high flame retardancy. Therefore, an adhesive agent and an adhesive tape obtained using the adhesive composition are useful, and can be preferably used as an adhesive tape for construction uses, for example.

In particular, the balance between adhesiveness and the holding force with respect to an adherend can be enhanced while good flame retardancy is achieved when the acrylic resin (A) contained in the adhesive composition according to the present disclosure contains a terminal end carboxy group-containing monomer (a3) unit represented by the following general formula (1),

$$-(CH_2-CR^1)- \\ \quad\quad | \\ CO-O-(R^2-COO-)_nH \quad \cdots (1)$$

where $R^1$ represents hydrogen or a methyl group, $R^2$ represents a divalent saturated aliphatic group, unsaturated aliphatic group, aromatic group, saturated alicyclic group, or unsaturated alicyclic hydrocarbon group, and n represents a positive number of 1 or more.

Furthermore, adhesiveness and the holding force with respect to an adherend can be enhanced particularly when the acrylic resin (A) contained in the adhesive composition according to the present disclosure contains the following monomer units (a1) to (a4):

(a1) 0.1 to 5 wt.% of the (meth)acrylic acid monomer unit;
(a2) 0.01 to 5 wt.% of the hydroxyl group-containing monomer unit;
(a3) 1 to 20 wt.% of the terminal end carboxy group-containing monomer unit represented by the general formula (1); and
(a4) 55 to 97 wt.% of a (meth)acrylate monomer unit having an alkyl group having 4 to 24 carbon atoms.

Furthermore, the balance between adhesiveness and the holding force with respect to an adherend can be enhanced particularly when the flame retardant (C) is contained in an amount of 1 to 100 wt.% in the adhesive composition according to the present disclosure.

Description of Embodiments

The following describes the present disclosure in detail.

Note that, in the present disclosure, "(meth)acryl" means acryl or methacryl, "(meth)acryloyl" means acryloyl or methacryloyl, and "(meth)acrylate" means acrylate or methacrylate. Also, "acrylic resin" refers to a resin that is obtained by polymerizing copolymerization components including at least one (meth)acrylate monomer.

An adhesive composition according to the present disclosure contains an acrylic resin (A) that contains structural units derived from specific monomers, namely specific monomer units.

<Acrylic Resin (A)>

The acrylic resin (A) used in the present disclosure contains a (meth)acrylic acid monomer (a1) unit and a hydroxyl group-containing monomer (a2) unit. Also, the acrylic resin (A) preferably contains a monomer (a3) unit, more preferably contains a monomer (a4) unit, and further contains a monomer (a5) unit and a monomer (a6) unit as necessary, in addition to the monomer (a1) unit and the monomer (a2) unit.

The following describes each monomer unit.

[Monomer (a1) Unit]

The content of the (meth)acrylic acid monomer (a1) unit is typically 0.1 to 5 wt.%, particularly preferably 0.5 to 4.5 wt.%, and more preferably 1 to 4 wt.% of the total weight of the acrylic resin (A). If the content is too small, adhesiveness tends to decrease, and if the content is too large, the viscosity of a coating solution tends to increase and ease of coating tends to be impaired.

[Monomer (a2) Unit]

Examples of copolymerization monomers that can be used to form the hydroxyl group-containing monomer (a2) unit include: primary hydroxyl group-containing monomers including (meth)acrylic acid hydroxyalkyl esters such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate, caprolactone-modified monomers such as caprolactone-modified 2-hydroxyethyl (meth)acrylate, oxyalkylene-modified monomers such as diethylene glycol (meth)acrylate and polyethylene glycol (meth)acrylate, and 2-acryloyloxyethyl-2-hydroxyethyl phthalate; secondary hydroxyl group-containing monomers such as 2-hydroxypropyl (meth)acrylate, 2-hydroxybutyl (meth)acrylate, and 3-chloro-2-hydroxypropyl (meth)acrylate; and tertiary hydroxyl group-containing monomers such as 2,2-dimethyl-2-hydroxyethyl (meth)acrylate.

Of these, primary hydroxyl group-containing monomers are preferable from the viewpoint of excellent reactivity with crosslinking agents, in particular, (meth)acrylic acid hydroxyalkyl esters are preferable, and 2-hydroxyethyl

(meth)acrylate and 4-hydroxybutyl (meth)acrylate are further preferable.

The hydroxyl group-containing monomer (a2) unit described above serves as a crosslinking point for the isocyanate crosslinking agent (b2) and thus its use is advantageous. The content of the hydroxyl group-containing monomer (a2) unit is typically 0.01 to 5 wt.%, particularly preferably 0.05 to 3 wt.%, and further preferably 0.05 to 2 wt.% of the total weight of the acrylic resin (A). If the content of the monomer (a2) unit is too small, the holding force tends to decrease, and if the content is too large, adhesiveness tends to decrease.

[Monomer (a3) Unit]

The monomer (a3) unit in the present disclosure is a terminal end carboxy group-containing monomer unit represented by the following general formula (1).

$$-(CH_2-CR^1)- \quad | \quad CO-O-(R^2-COO-)_nH \quad \cdots \quad (1)$$

where $R^1$ represents hydrogen or a methyl group, $R^2$ represents a divalent saturated aliphatic group, unsaturated aliphatic group, aromatic group, saturated alicyclic group, or unsaturated alicyclic hydrocarbon group, and n represents a positive number of 1 or more.

$R^1$ described above is preferably hydrogen, the hydrocarbon represented by $R^2$ is preferably alkylene, such as a methylene group, having 1 to 10 carbon atoms, 1 to 5 carbon atoms, or 1 to 2 carbon atoms, phenyl, or phenylene, and more preferably ethylene, and n described above is preferably 1 to 10, more preferably 1 to 5, further preferably 1 to 3, and particularly preferably 1 to 2. Monomer (a3) units having different combinations of these may be contained together.

The content of the monomer (a3) unit described above is typically 1 to 20 wt.%, particularly preferably 1.5 to 15 wt.%, and further preferably 2 to 8.5 wt.% of the total weight of the acrylic resin (A). Adhesiveness tends to decrease both when the content is too small and when the content is too large.

An acrylic resin (A) containing the monomer (a3) unit described above can be obtained through polymerization in which a monomer represented by the following chemical formula (2) is used as a copolymerization monomer.

$$CH_2=CR^1\text{-}CO\text{-}O\text{-}(R^2\text{-}COO\text{-})_nH \cdots \quad (2)$$

(where $R^1$ represents hydrogen or a methyl group, $R^2$ represents a divalent saturated aliphatic group, unsaturated aliphatic group, aromatic group, saturated alicyclic group, or unsaturated alicyclic hydrocarbon group, and n represents a positive number of 1 or more.)

Regarding the ratio between the content of the monomer (a3) unit and the content of the monomer (a1) unit, the content of the monomer (a1) unit is typically 10 to 400 parts by weight, particularly preferably 20 to 200 parts by weight, more preferably 25 to 100 parts by weight, and further preferably 30 to 75 parts by weight, relative to 100 parts by weight of the monomer (a3) unit. If the content of the monomer (a1) unit is too small, the holding force tends to decrease, and if the content of the monomer (a1) unit is too large, the viscosity of a coating solution tends to increase and ease of coating tends to be impaired.

[Monomer (a4) Unit]

It is desirable that the acrylic resin (A) used in the present disclosure further contains a (meth)acrylate monomer (a4) unit that has an alkyl group having 4 to 24 carbon atoms. A copolymerization monomer that is used to form the (meth)acrylate monomer (a4) unit having an alkyl group having 4 to 24 carbon atoms is only required to be a (meth)acrylate monomer having any of alkyl groups having 4 to 24 carbon atoms. In particular, a (meth)acrylate monomer (a4-1) that has an alkyl group having 4 to 7 carbon atoms and a (meth)acrylate monomer (a4-2) that has an alkyl group having 8 to 24 carbon atoms are preferably contained.

Examples of the (meth)acrylate monomer (a4-1) having an alkyl group having 4 to 7 carbon atoms include n-butyl (meth)acrylate, t-butyl (meth)acrylate, isobutyl (meth)acrylate, and n-hexyl (meth)acrylate. Of these, n-butyl (meth)acrylate is easily available and economical and thus is preferable.

Examples of the (meth)acrylate monomer (a4-2) having an alkyl group having 8 to 24 carbon atoms include 2-ethylhexyl (meth)acrylate, n-octyl (meth)acrylate, isooctyl (meth)acrylate, isononyl (meth)acrylate, isodecyl (meth)acrylate, lauryl (meth)acrylate, tridecyl (meth)acrylate, isotridecyl (meth)acrylate, myristyl (meth)acrylate, isomyristyl (meth)acrylate, cetyl (meth)acrylate, stearyl (meth)acrylate, isostearyl (meth)acrylate, and behenyl (meth)acrylate. Of

these, (meth)acrylates having an alkyl group having 8 to 12 carbon atoms have low polarity and low glass transition temperatures and thus are preferable, and 2-ethylhexyl (meth)acrylate is particularly preferable.

The content of the monomer (a4) unit is typically 55 to 97 wt.%, particularly preferably 70 to 95 wt.%, and further preferably 80 to 93 wt.% of the total weight of the acrylic resin (A). If the content is too small, adhesiveness tends to decrease, and if the content is too large, both adhesiveness and the holding force tend to decrease.

The weight ratio (a4-1)/(a4-2) of the content of the monomer (a4-1) unit to the content of the monomer (a4-2) unit is typically 1/99 to 85/15, particularly preferably 2/98 to 75/25, more preferably 3/97 to 70/30, further preferably 5/95 to 60/40, and yet more preferably 5/95 to 45/55. If the ratio of the content of the monomer (a4-1) unit is too low, the holding force tends to decrease, and if the ratio is too high, adhesiveness tends to decrease.

[Monomer (a5) Unit]

It is preferable that the acrylic resin (A) used in the present disclosure further contains a (meth)acrylate monomer (a5-1) unit that has an alkyl group having 1 to 3 carbon atoms, a cyclic structure-containing monomer (a5-2) unit, or a vinylester monomer (a5-3) unit having 3 to 10 carbon atoms. The monomers (a5-1) to (a5-3) are collectively referred to as monomers (a5).

Examples of copolymerization monomers that can be used to form the (meth)acrylate monomer (a5-1) unit having an alkyl group having 1 to 3 carbon atoms include methyl (meth)acrylate, ethyl (meth)acrylate, and propyl (meth)acrylate. Of these, methyl (meth)acrylate and ethyl (meth)acrylate are preferable.

A copolymerization monomer that is used to form the cyclic structure-containing monomer (a5-2) unit is typically an acrylic monomer that has a substituent containing a cyclic structure. Examples of copolymerization monomers that can be used to form the cyclic structure-containing monomer (a5-2) unit include heterocyclic ring-containing (meth)acrylates such as N-(meth)acryloylmorpholine, N-vinylpyrrolidone, N-vinylcaprolactam, vinylpyrrolidone, N-(meth)acryloyl piperidine, and N-(meth)acryloyl pyrrolidine, which contain heterocyclic rings such as morpholine ring, piperidine ring, pyrrolidine ring, and piperazine ring, phenyl (meth)acrylate, phenoxyethyl (meth)acrylate, phenyl diethylene glycol (meth)acrylate, 2-hydroxy-3-phenoxypropyl (meth)acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxy polyethylene glycol (meth)acrylate, isobornyl (meth)acrylate, biphenyloxyethyl (meth)acrylate, styrene, and $\alpha$-methylstyrene. Of these, heterocyclic ring-containing (meth)acrylates having a morpholine ring have well-balanced physical properties and thus are preferable, and in particular, N-(meth)acryloylmorpholine is preferable from the viewpoint of easy availability and safety.

Examples of copolymerization monomers that can be used to form the vinylester monomer (a5-3) unit having 3 to 10 carbon atoms include vinyl formate, vinyl acetate, vinyl propionate, vinyl valerate, vinyl butyrate, vinyl isobutyrate, and vinyl pivalate. Of these, vinyl acetate is preferable from the viewpoint of easy availability.

The content of the monomer (a5) unit is typically 11 wt.% or less, preferably 10 wt.% or less, and particularly preferably 8 wt.% or less of the total weight of the acrylic resin (A). If the content of the monomer (a5) component is too large, adhesiveness with respect to adherends tends to decrease. The lower limit of the content of the (a5) component in copolymerization components (a) is 0 wt.%, but the content of the (a5) component is typically 1 wt.%.

[Monomer (a6) Unit]

In the present disclosure, another copolymerization monomer (a6) unit may also be contained as necessary, and examples of copolymerization monomers that can be used to form the other copolymerization monomer (a6) unit include functional group-containing monomers such as acetoacetyl group-containing monomer, isocyanate group-containing monomer, glycidyl group-containing monomer, amino group-containing monomer, and amide group-containing monomer, and other copolymerization monomers.

Examples of the acetoacetyl group-containing monomer include 2-(acetoacetoxy)ethyl (meth)acrylate and allyl acetoacetate.

Examples of the isocyanate group-containing monomer include 2-acryloyloxyethyl isocyanate, 2-methacryloyloxyethyl isocyanate, and alkylene oxide adducts thereof.

Examples of the glycidyl group-containing monomer include glycidyl (meth)acrylate and allyl glycidyl (meth)acrylate.

The amino group-containing monomer may be a monomer having an ethylenically unsaturated double bond and an amino group (unsubstituted or substituted amino group). Examples of the amino group-containing monomer include: monosubstituted amino group-containing (meth)acrylic acid esters including aminoalkyl (meth)acrylates such as aminomethyl (meth)acrylate, aminoethyl (meth)acrylate, aminopropyl (meth)acrylate, and aminoisopropyl (meth)acrylate, and N-alkylaminoalkyl (meth)acrylates such as N-(t-butyl)aminoethyl (meth)acrylate; disubstituted amino group-containing (meth)acrylic acid esters including N,N-dialkylaminoalkyl (meth)acrylates such as N,N-dimethylaminoethyl

(meth)acrylate, N,N-diethylaminoethyl (meth)acrylate, and N,N-dimethylaminopropyl (meth)acrylate; dialkylaminoalkyl (meth)acrylamides such as N,N-dimethylaminopropyl (meth)acrylamide, and quaternary salts of these amino group-containing monomers; amino group-containing styrenes such as p-aminostyrene; dialkylamino group-containing styrenes such as 3-(dimethylamino) styrene and dimethylaminomethylstyrene; dialkylaminoalkyl vinyl ethers such as N,N-dimethylaminoethyl vinyl ether and N,N-diethylaminoethyl vinyl ether; and allylamine, 4-diisopropylamino-1-butene, trans-2-butene-1,4-diamine, and 2-vinyl-4,6-diamino-1,3,5-triazine.

The amide group-containing monomer may be a monomer having an ethylenically unsaturated double bond and an amide group (group having an amide bond). Examples of the amide group-containing monomer include: (meth)acrylamide; N-alkyl(meth)acrylamides such as N-methyl(meth)acrylamide, N-ethyl(meth)acrylamide, N-propyl(meth)acrylamide, N-isopropyl(meth)acrylamide, N-n-butyl(meth)acrylamide, N-isobutyl(meth)acrylamide, N-s-butyl(meth)acrylamide, N-t-butyl(meth)acrylamide, N-hexyl(meth)acrylamide, diacetone(meth)acrylamide, N,N'-methylenebis(meth)acrylamide, and N-(1,1-dimethyl-3-oxobutyl) (meth)acrylamide; N,N-dialkyl (meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, N,N-diisobutyl(meth)acrylamide, N,N-di(s-butyl) (meth)acrylamide, N,N-di(t-butyl)(meth)acrylamide, N,N-dipentyl(meth)acrylamide, N,N-dihexyl(meth)acrylamide, N,N-diheptyl(meth)acrylamide, N,N-dioctyl(meth)acrylamide, N,N-diallyl(meth)acrylamide, and N,N-ethylmethylacrylamide; dialkylaminoalkyl (meth)acrylamides such as N,N-dimethylaminopropyl(meth)acrylamide; substituted amide group-containing monomers such as N-vinylacetamide, N-vinylformamide, (meth)acrylamidoethylethylene urea, and (meth)acrylamide-t-butyl sulfonate; hydroxy group-containing (meth)acrylamides such as N-methylol(meth)acrylamide, N-hydroxyethyl(meth)acrylamide, and N-methylolpropane(meth)acrylamide; alkoxy group-containing (meth)acrylamides such as N-methoxymethyl(meth)acrylamide and N-(n-butoxymethyl)(meth)acrylamide; and quaternary salts of these amide group-containing monomers.

Examples of the other copolymerization monomers described above include: monomers that have an alkoxy group or an oxyalkylene group such as 2-methoxyethyl (meth)acrylate, 2-ethoxyethyl (meth)acrylate, methoxydiethylene glycol (meth)acrylate, ethoxydiethylene glycol (meth)acrylate, methoxypolyethylene glycol (meth)acrylate, and polypropylene glycol-mono (meth) acrylate; and acrylonitrile, methacrylonitrile, vinyl stearate, vinyl chloride, vinylidene chloride, alkyl vinyl ether, vinyltoluene, itaconic acid dialkyl ester, fumaric acid dialkyl ester, allyl alcohol, acryl chloride, methyl vinyl ketone, allyltrimethylammonium chloride, and dimethylallyl vinyl ketone.

The other copolymerization monomer (a6) may be contained within a range in which the effects of the present disclosure are not hindered, for example, in an amount of 10 wt.% or less, to adjust physical properties according to the intended use. The lower limit of the content of the other copolymerization monomer (a6) is typically 0 wt.%.

The acrylic resin (A) is obtained by polymerizing the monomers (a1) and (a2) described above, and preferably the monomer (a3), further preferably the monomer (a4), and the monomers (a5) to (a6) as necessary. That is, the acrylic resin (A) that contains the monomer (a1) unit and the monomer (a2) unit described above, preferably the monomer (a3) unit, and further preferably the monomer (a4) unit, and further contains the monomer (a5) unit and the monomer (a6) unit as necessary is obtained. Note that one type of each of the monomer (a1) to (a6) units may be used alone or two or more types of each of the monomer (a1) to (a6) units may be used in combination.

The acrylic resin (A) is preferably produced through solution polymerization from the viewpoint of safely and stably producing the acrylic resin (A) with a desired monomer composition. In particular, it is preferable to carry out polymerization in an organic solvent, and an acrylic resin (A) polymerized in an organic solvent is obtained as an organic solvent-based acrylic resin.

The solution polymerization can be performed using a common method. For example, copolymerization components such as the above-described monomers (a1) to (a6) and a polymerization initiator can be mixed with an organic solvent or added dropwise into the organic solvent, and polymerization can be caused to proceed in a reflux state or at 50°C to 98°C for 0.1 to 20 hours.

Specific examples of the polymerization initiator include azo polymerization initiators such as azobisisobutyronitrile and azobisdimethylvaleronitrile and peroxide polymerization initiators such as benzoyl peroxide, lauroyl peroxide, di-t-butylperoxide, and cumene hydroperoxide, which are typical radical polymerization initiators. Any one of these may be used alone or two or more of these may be used in combination.

The polymerization initiator is typically used in an amount of 0.001 to 5 parts by weight relative to 100 parts by weight of the copolymerization components.

The acrylic resin (A) obtained as described above typically has a weight-average molecular weight of 100,000 to 5,000,000, preferably 300,000 to 1,500,000, and particularly preferably 400,000 to 900,000. If the weight-average molecular weight is too small, durability tends to decrease, and if the weight-average molecular weight is too large, adhesiveness tends to decrease.

Also, the acrylic resin (A) preferably has a dispersity (weight-average molecular weight/number-average molecular weight) of 20 or less, more preferably 15 or less, further preferably 10 or less, and particularly preferably 7 or less. If the dispersity is too high, durability of an adhesive layer tends to decrease and foaming or the like is likely to

occur. The lower limit of the dispersity is typically 1.1 due to limitations in the production.

The weight-average molecular weight of the acrylic resin (A) is a weight-average molecular weight that is based on a standard polystyrene molecular weight and is measured using a high-speed liquid chromatograph (manufactured by Nihon Waters K.K., "Waters 2695 (apparatus main body)" and "Waters 2414 (detector)") and three columns Shodex GPC KF-806L (each having an exclusion limit molecular weight of $2\times10^7$, a separation range of 100 to $2\times10^7$, a theoretical plate number of 10,000 per column, and filled with a column packing material of styrene-divinylbenzene copolymer having a particle diameter of 10 $\mu$m) connected in series. The number-average molecular weight can be measured using the same method.

Also, the acrylic resin (A) preferably has a glass transition temperature (Tg) of -80°C to 10°C, particularly preferably -70°C to -10°C, and further preferably -65°C to -20°C. If the glass transition temperature is too high, tackiness tends to be insufficient, and if the glass transition temperature is too low, heat resistance tends to decrease.

The glass transition temperature (Tg) is a value calculated by putting glass transition temperatures of homopolymers of the respective monomers constituting the acrylic resin (A) and weight fractions of the respective monomers into the following Fox equation.

$$\frac{1}{Tg} = \frac{Wa}{Tga} + \frac{Wb}{Tgb} + \cdot \cdot \cdot + \frac{Wn}{Tgn}$$

Tg: Glass transition temperature (K) of acrylic resin (A)
Tga: Glass transition temperature (K) of homopolymer of monomer A
Wa: Weight fraction of monomer A
Tgb: Glass transition temperature (K) of homopolymer of monomer B
Wb: Weight fraction of monomer B
Tgn: Glass transition temperature of homopolymer of monomer N
Wn: Weight fraction of monomer N

$$(Wa+Wb+ \ldots +Wn=1)$$

The glass transition temperature of a homopolymer of each monomer constituting the acrylic resin (A) used in this calculation is typically a value measured using a differential scanning calorimeter (DSC) and a method that conforms to JIS K7121-1987 or JIS K6240 or a value shown in a catalogue.

Typically, the viscosity of the acrylic resin (A) is adjusted using a solvent or the like and the acrylic resin (A) is used as an acrylic resin (A) solution in coating. From the viewpoint of ease of handling, the viscosity of the acrylic resin (A) solution is preferably 500 to 20000 mPa·s/25°C, particularly preferably 1000 to 18000 mPa·s/25°C, and further preferably 2000 to 15000 mPa·s/25°C. If the viscosity is too high, the solution tends to be difficult to handle due to a reduction in the fluidity, and if the viscosity is too low, application of an adhesive agent tends to be difficult. Note that the concentration of the solution when used in coating is typically 10 to 70 wt.%.

The solvent described above is not particularly limited as long as the acrylic resin (A) can dissolve in the solvent, and examples of the solvent include: ester solvents such as methyl acetate, ethyl acetate, methyl acetoacetate, and ethyl acetoacetate; ketone solvents such as acetone, methyl ethyl ketone, and methyl isobutyl ketone; aromatic solvents such as toluene and xylene; and alcohol solvents such as methanol, ethanol, and propyl alcohol. Of these, ethyl acetate and methyl ethyl ketone are preferably used from the viewpoint of solubility, ease of drying, cost, and the like, and in particular, ethyl acetate is preferably used. Any one of these solvents may be used alone or two or more of the solvents may be used in combination.

The viscosity of the acrylic resin (A) solution is measured using the resin solution adjusted to 25°C and a rotational viscometer method in which a Brookfield type viscometer is used.

<Crosslinking Agent (B)>

The adhesive composition according to the present disclosure contains a crosslinking agent (B) in addition to the acrylic resin (A).

The crosslinking agent (B) reacts with functional groups contained in the acrylic resin (A) and forms a crosslinked structure. In particular, when an epoxy crosslinking agent (b1) and an isocyanate crosslinking agent (b2) are used in combination, a flame retardancy improving effect that is achieved by adding a flame retardant is increased.

Reasons for this are not clear, but it is presumed that an adhesive layer that has a uniform crosslink density can be formed as a result of the epoxy crosslinking agent (b1) and the isocyanate crosslinking agent (b2) being used

in combination, and flame retardancy can be imparted by adding a small amount of a flame retardant. It is thought that, when the epoxy crosslinking agent (b1) is used alone, the crosslink density decreases as a result of the crosslinked structure being hydrolyzed due to moisture generated during combustion and the combustion is likely to continue, and when the isocyanate crosslinking agent (b2) is used alone, the flame retardancy is insufficient presumably because the crosslink density becomes ununiform.

Moreover, when the epoxy crosslinking agent (b1) and the isocyanate crosslinking agent (b2) are used in combination, even an adhesive composition that contains a flame retardant has adhesive performance that realizes adhesiveness and the holding force in a well-balanced manner.

Reasons for this are not clear, but when an adhesive agent constituted by the acrylic resin (A) containing the crosslinking agent (B) contains a flame retardant (C), a cohesive force of an adhesive layer tends to decrease and the holding force tends to significantly decrease, due to the flame retardant (C) acting like a plasticizer, although this is not certain. However, the inventor of the present disclosure found that, even if an adhesive composition contains the flame retardant (C), when the epoxy crosslinking agent (b1) and the isocyanate crosslinking agent (b2) are used in combination, a strong and dense crosslinked structure is formed, a high cohesive force is maintained, and the holding force is increased. The inventor of the present disclosure also found that when the acrylic resin (A) contains the (meth)acrylic acid monomer (a1) unit and the hydroxyl group-containing monomer (a2) unit, and further contains the terminal end carboxy group-containing monomer (a3) unit as necessary, the adhesive layer becomes flexible and a high peel strength can be maintained even if the strong and dense crosslinked structure is formed.

Examples of the epoxy crosslinking agent (b1) include: aliphatic epoxy crosslinking agents such as ethylene glycol diglycidyl ether, trimethylolpropane diglycidyl ether, and diglycidyl amine; alicyclic epoxy crosslinking agents such as 1,3-bis(N,N'-diglycidylaminomethyl)cyclohexane, 1,6-hexanediol diglycidyl ether, and N,N,N',N'-tetraglycidyl-m-xylylenediamine; aromatic epoxy crosslinking agents such as diglycidyl aniline; and heterocyclic epoxy crosslinking agents such as 1,3,5-tris-(2,3-epoxybutyl)-isocyanurate, 1,3,5-tris-(3,4-epoxybutyl)-isocyanurate, and 1,3,5-tris-(4,5-epoxypentyl)-isocyanurate. Of these, alicyclic epoxy crosslinking agents are preferable. Any one of these may be used alone or two or more of these may be used in combination.

The isocyanate crosslinking agent (b2) described above contains at least two isocyanate groups. Examples of the isocyanate crosslinking agent include: aromatic polyisocyanates such as tolylene diisocyanate, diphenylmethane diisocyanate, and xylylene diisocyanate; aliphatic polyisocyanates such as hexamethylene diisocyanate; alicyclic polyisocyanates such as isophorone diisocyanate and hydrogenated diphenylmethane diisocyanate; a biuret form and an isocyanurate form of any of these compounds; and an adduct form of any of these compounds which is a product of a reaction with a lower-molecular-weight active hydrogen-containing compound such as ethylene glycol, propylene glycol, neopentyl glycol, trimethylolpropane, and castor oil. In particular, an adduct of tolylene diisocyanate and trimethylolpropane is preferable. Any one of these may be used alone or two or more of these may be used in combination.

The content of the epoxy crosslinking agent (b1) is preferably 0.005 to 0.1 parts by weight, more preferably 0.008 to 0.08 parts by weight, further preferably 0.01 to 0.05 parts by weight, and particularly preferably 0.012 to 0.03 parts by weight, relative to 100 parts by weight of the acrylic resin (A). If the content is too small, the holding force tends to decrease, and if the content is too large, adhesiveness to various adherends tends to decrease.

The content of the isocyanate crosslinking agent (b2) is preferably 0.1 to 1.0 part by weight, more preferably 0.15 to 0.8 parts by weight, further preferably 0.18 to 0.5 parts by weight, and particularly preferably 0.2 to 0.4 parts by weight, relative to 100 parts by weight of the acrylic resin (A). If the content is too small, the holding force tends to decrease, and if the content is too large, adhesiveness tends to decrease.

Regarding the ratio between the content of the epoxy crosslinking agent (b1) and the content of the isocyanate crosslinking agent (b2), the content of the epoxy crosslinking agent (b1) is preferably 2.5 to 25 parts by weight, particularly preferably 3.5 to 15 parts by weight, and further preferably 5 to 10 parts by weight, relative to 100 parts by weight of the isocyanate crosslinking agent (b2).

The crosslinking agents can be used in a state of being diluted with a solvent or the like, but the above-described contents and the above-described ratio between contents are the net contents of the crosslinking agents excluding the solvent or the like and the ratio between the net contents.

The present disclosure is characterized in using the crosslinking agent (b1) and the crosslinking agent (b2) in combination, but another crosslinking agent may also be used in some cases. As the other crosslinking agent, an aziridine crosslinking agent, a melamine crosslinking agent, an aldehyde crosslinking agent, an amine crosslinking agent, or a metal chelate crosslinking agent may be further used, for example. Any one of these or a combination of two or more of these may be used, but the effects of the present disclosure cannot be achieved with a combination of crosslinking agents that do not include the (b1) component or the (b2) component.

Examples of the aziridine crosslinking agent include diphenylmethane-4,4'-bis(1-aziridinecarboxide), trimethylolpropane tri-β-aziridinyl propionate, tetramethylolmethane tri-β-aziridinyl propionate, toluene-2,4-bis(1-aziridinecarboxide), triethylenemelamine, bisisophthaloyl-1-(2-methylaziridine), tris-1-(2-methylaziridine)phosphine, and trimethylolpropane tri-β-(2-methylaziridine)propionate.

Examples of the melamine crosslinking agent include: melamine; methylol melamine derivatives such as amino group-containing methylol melamine obtained through condensation of melamine and formaldehyde, imino group-containing methylol melamine, and hexamethylol melamine; and alkylated methylol melamines such as partially- or fully-alkylated methylol melamine obtained by partially or fully etherifying a methylol melamine derivative through a reaction with a lower alcohol such as methyl alcohol or butyl alcohol and imino group-containing partially- or fully-alkylated methylol melamines.

Examples of the aldehyde crosslinking agent include: aldehyde compounds from which free aldehydes are formed in aqueous solutions thereof such as formaldehyde, acetaldehyde, propionaldehyde, butylaldehyde, glyoxal, glutaraldehyde, dialdehyde starch, hexamethylene tetramine, 1,4-dioxane-2,3-diol, 1,3-bis(hydroxymethyl)-2-imidazolidine, dimethylol urea, N-methylolacrylamide, urea formalin resin, and melamine formalin resin; and aromatic aldehyde compounds such as benzaldehyde, 2-methylbenzaldehyde, 4-methylbenzaldehyde, p-hydroxybenzaldehyde, and m-hydroxybenzaldehyde.

Examples of the amine crosslinking agent include 4,4'-methylene-bis(2-chloroaniline) (hereinafter abbreviated as "MOCA"), modified MOCA, and diethyl toluene diamine.

Examples of the metal chelate crosslinking agent include chelate compounds containing metal atoms such as aluminum, zirconium, titanium, zinc, iron, or tin, and aluminum chelate compounds are preferable from the viewpoint of performance. Examples of aluminum chelate compounds include diisopropoxyaluminum monooleyl acetoacetate, monoisopropoxyaluminum bisoleyl acetoacetate, monoisopropoxyaluminum monooleate monoethyl acetoacetate, diisopropoxyaluminum monolauryl acetoacetate, diisopropoxyaluminum monostearyl acetoacetate, and diisopropoxyaluminum monoisostearyl acetoacetate.

<Flame Retardant (C)>

A known flame retardant that is commonly used as a flame retardant for adhesive agents can be used as the flame retardant (C) in the present disclosure. Examples of the flame retardant include phosphorous flame retardants, metal hydroxyl group flame retardants, metal phosphinate flame retardants, halogen flame retardants, a combination of a halogen flame retardant and antimony trioxide, and nitrogen-containing compounds such as melamine cyanurate and triazine compounds. Any one of these may be used alone or two or more of these may be used in combination.

Examples of the phosphorus flame retardants include: halogen-free phosphoric acid esters such as trimethyl phosphate, triethyl phosphate, triphenyl phosphate, tricresyl phosphate, trixylenyl phosphate, cresyl diphenyl phosphate, 2-naphtyl diphenyl phosphate, and cresyl di-2,6-xylenyl phosphate; aromatic condensed phosphoric acid esters such as "CR-733S", "CR-741", and "PX-200" manufactured by DAIHACHI CHEMICAL INDUSTRY CO., LTD.; halogen-free condensed phosphoric acid esters such as "DAIGUARD-580", "DAIGUARD-610", and "DAIGUARD-880" manufactured by DAIHACHI CHEMICAL INDUSTRY CO., LTD.; amine phosphates such as melamine polyphosphate; and ammonium polyphosphates that are not coated with resin or coated with melamine or the like.

Of these, polyphosphates are preferable because they do not contain halogens but have a high phosphorus concentration and accordingly have high flame retardancy, and can impart flame retardancy without impairing adhesive properties when added in a small amount. In particular, ammonium polyphosphates are preferable, and ammonium polyphosphates coated with melamine or the like can suppress hydrolysis and have excellent resistance to moisture and heat and thus are particularly preferable.

Examples of the metal hydroxyl group flame retardants include magnesium hydroxide and aluminum hydroxide.

Examples of the metal phosphinate flame retardants include "ExolitOP1230" and "ExolitOP930" manufactured by Clariant AG.

Examples of the halogen flame retardants include: bromine flame retardants such as tetrabromobisphenol A, hexabromocyclodecane, dibromodiphenyloxide, tetrabromobisphenol A polycarbonate oligomer, brominated polystyrene, and ethylenebis tetrabromo phthalimide; chlorine flame retardants such as chlorinated paraffin and perchlorocyclopentadecane; halogen-containing phosphoric acid esters such as tris(tribromoneopentyl)phosphate and tris(chloropropyl)phosphate; and halogen-containing condensed phosphoric acid esters such as "CR-504L", "CR-570", and "DAIGUARD-540" manufactured by DAIHACHI CHEMICAL INDUSTRY CO., LTD.

Of these, flame retardants that contain halogens may generate toxic halogen gas when burned or cause metal corrosion, and therefore, the flame retardant (C) is preferably a flame retardant that does not contain halogens.

Regarding compound products (composites and composite materials) of flame retardants, it is thought that when flame retardants having different action mechanisms are used in combination, rather than each being used alone, a synergistic effect can be obtained. However, in the present disclosure, it is preferable to use a single flame retardant (C) alone from the viewpoint of securing adhesiveness and avoiding degradation of compatibility with the adhesive agent.

In particular, the phosphorous flame retardants listed above are preferable, and ammonium polyphosphates coated with melamine or the like can suppress degradation of adhesive properties and have excellent flame retardancy, and also can suppress hydrolysis and have excellent resistance to moisture and heat, and thus are particularly preferable.

The content of the flame retardant (C) is preferably 1 to 100 parts by weight, more preferably 5 to 80 parts by weight, further preferably 7 to 60 parts by weight, yet more preferably 8 to 35 parts by weight, and particularly preferably 10 to 25 parts by weight, relative to 100 parts by weight of the acrylic resin (A). If the content of the flame retardant (C) is too large, adhesive properties of an adhesive tape tend to be degraded, and if the content is too small, flame retardancy tends to be insufficient.

< Tackifier (D)>

A tackifier (D) is not an essential component, but is used to make the adhesive composition further exhibit good physical properties of the acrylic resin (A), and is preferably contained in the adhesive composition according to the present disclosure. Examples of the tackifier (D) include resins that are compatible with the acrylic resin (A), such as rosin resin, terpene resin, xylene resin, phenol resin, coumarone resin, and petroleum resin. Any one of these tackifiers (D) may be used alone or two or more of these may be used in combination. Of these, rosin resin, terpene resin, and petroleum resin are preferable.

Examples of the rosin resin include: a rosin ester resin that is obtained by hydrogenating, disproportionating, or dimerizing raw material rosin, or adding acid to raw material rosin, and esterifying the obtained product using glycerin or pentaerythritol; and a rosin phenol resin obtained by adding phenol to raw material rosin. Good physical properties of the acrylic resin (A) are further exhibited when any rosin resin is used, but it is particularly preferable to use a disproportionated rosin ester that is obtained by disproportionating raw material rosin and esterifying the disproportionation product using glycerin or pentaerythritol and has a softening point within a range of 70°C to 130°C, a polymerized rosin ester that is obtained by dimerizing raw material rosin and esterifying the dimerization product using pentaerythritol and has a softening point within a range of 110°C to 170°C, or rosin phenol that is obtained by adding phenol to raw material rosin and has a softening point within a range of 120°C to 160°C.

The terpene resin is a generic term for compounds that are represented by a molecular formula $(C_5H_8)_n$ and follow the isoprene rule. Examples of terpene resins that can be used as the tackifier (D) in the present disclosure include a resin obtained by using monoterpene (a-pinene, β-pinene, limonene, etc.) as a raw material and causing homopolymerization or copolymerization using a Friedel-Crafts catalyst. Specific examples of resins obtained through homopolymerization or copolymerization of monoterpene include α-pinene resin, β-pinene resin, dipentene resin, terpene phenol resin, aromatic modified terpene resin, and hydrogenated terpene resin obtained by hydrogenating these resins. Of these, terpene phenol resin is preferable from the viewpoint of good compatibility with the acrylic resin (A). Although good physical properties of the acrylic resin (A) are further exhibited when any terpene phenol resin is used, it is particularly preferable to use a terpene phenol resin that has a softening point within a range of 90°C to 170°C and a hydroxyl value within a range of 20 to 250 (mgKOH/g), and it is further preferable to use a terpene phenol resin that has a softening point within a range of 100°C to 150°C and a hydroxyl value within a range of 50 to 150 (mgKOH/g).

The petroleum resin is obtained through polymerization of C4 to C5 and C9 to C11 fraction monomers that are generated through thermal decomposition of naphtha or the like, and hydrogenation, for example. According to the type of the raw material fraction, petroleum resins are classified into pure monomer resin, aliphatic (C5) petroleum resin, aromatic (C9) petroleum resin, and hydrogenated petroleum resin, for example. Although good physical properties of the acrylic resin

(A) are further exhibited when any petroleum resin is used, it is particularly preferable to use a petroleum resin having a softening point within a range of 90°C to 130°C, and it is further preferable to use a petroleum resin obtained through copolymerization of a styrene monomer and an aliphatic monomer.

The content of the tackifier (D) is typically 1 to 50 parts by weight, particularly preferably 5 to 30 parts by weight, and further preferably 5 to 20 parts by weight, relative to 100 parts by weight of the acrylic resin (A), and the tackifier is added in an appropriate amount according to the required physical properties.

Furthermore, it is possible to add, to the adhesive composition according to the present disclosure, other components as long as the effects of the present disclosure are not impaired. Examples of the other components include a resin component other than the acrylic resin (A), an acrylic monomer, various additives such as a polymerization inhibitor, an antioxidant, a corrosion inhibitor, a crosslinking accelerating agent, a radical generating agent, a peroxide, an ultraviolet absorbing agent, a plasticizer, a pigment, a stabilizer, a filler, and a radical scavenger, metal particles, and resin particles. Any one of these may be used alone or two or more of these may be used in combination. Other than the above, a small amount of impurities contained in raw materials used to produce constituent components of the adhesive composition may be contained, for example.

The content of the other components is preferably 5 parts by weight or less, more preferably 1 part by weight or less, and further preferably 0.5 parts by weight or less, relative to 100 parts by weight of the acrylic resin (A). The lower limit of the content is typically 0 part by weight. If the content is too large, compatibility with the acrylic resin (A) tends to be impaired and durability tends to decrease. However, additives (a pigment, a filler, metal particles, resin particles, etc.) that do not exhibit their effects when added in the above-described amount may be added in an appropriate

amount within a range in which the effects of the present disclosure are not hindered while the effects of the additives are exhibited.

As described above, the adhesive composition according to the present disclosure contains the acrylic resin (A), the crosslinking agent (B), and the flame retardant (C), and further contains the tackifier (D), other components, or the like as necessary.

There is no particular limitation on the method for producing the adhesive composition according to the present disclosure, and it is possible to use a commonly known mechanical kneading dispersion method, and another known method such as a solvent dispersion method or an ultrasonic dispersion method as necessary.

The adhesive composition according to the present disclosure can be obtained by mixing the components described above. Also, an adhesive agent according to the present disclosure can be obtained by crosslinking the adhesive composition. The adhesive agent can be applied to various substrates to be used as an adhesive agent on an adhesive tape. In particular, the adhesive agent can be preferably used for an adhesive layer of a flame retardant adhesive tape.

The adhesive composition according to the present disclosure preferably has a gel fraction of 30 wt.% or more when crosslinked from the viewpoint of achieving a strong holding force, and the gel fraction is more preferably 35 wt.% or more, and particularly preferably 40 wt.% or more. The gel fraction can be adjusted to be higher than or equal to the lower limit described above by adjusting the types and amounts of the epoxy crosslinking agent (b1) and the isocyanate crosslinking agent (b2). The upper limit of the gel fraction is preferably 70 wt.% or less, more preferably 60 wt.% or less, and particularly preferably 50 wt.% or less. If the gel fraction is too low, the holding force tends to decrease, and if the gel fraction is too high, the peel strength tends to decrease.

<Adhesive Tape>

An adhesive tape according to the present disclosure contains the adhesive agent obtained by crosslinking the above-described adhesive composition, as an adhesive layer. Specifically, the adhesive tape can be obtained by dissolving the adhesive composition in a solvent such as ethyl acetate to prepare an adhesive composition solution for coating such that the solution has a solid content concentration of 10 to 70 wt.%, applying the solution to a substrate, and drying the substrate. The adhesive composition prepared as described above is obtained as an organic solvent-based adhesive composition.

A commonly known method for producing an adhesive tape can be used to produce the adhesive tape. For example, the adhesive tape can be produced using a method of applying the adhesive agent to one surface of a substrate, drying the substrate, and overlaying a release liner on the surface of the formed adhesive layer, or a method of applying the adhesive agent on one surface of a release liner, drying the release liner, and overlaying a substrate on the surface of the formed adhesive layer. Of these, it is preferable to use the method of applying the adhesive agent on one surface of a release liner, drying the release liner, and overlaying a substrate on the surface of the formed adhesive layer from the viewpoint of handling and the like.

The substrate is preferably tearable by hand, and it is possible to perform commonly known surface treatment, examples thereof including physical treatment such as corona discharge treatment and plasma treatment and chemical treatment such as undercoating treatment, on the surface of the substrate tearable by hand.

Conventionally known substrates can be used as the substrate with no particular limitation. Examples of the substrate include rayon cloth, cotton cloth, polyester cloth, cloth formed of mixed yarn of rayon and polyester, nonwoven cloth, flat yarn cloth, and a laminated film obtained by laminating a plastic film on flat yarn cloth. Of these, a substrate that contains flat yarn cloth has high tensile strength in the longitudinal direction, and thus is preferable.

Flat yarn cloth is woven cloth obtained by weaving flat threads called flat yarn formed by cutting a polyethylene film or a polypropylene film into strips and stretching the strips to increase the strength. The flat yarn cloth is used in a state where intersections between flat yarns constituting the warp and the weft of the woven cloth are fixed through heat fusion to prevent misalignment.

Examples of the release liner include: a plastic film made of plastics, examples thereof including polyolefin resin such as polyethylene, polyester resin such as polyethylene terephthalate, vinyl acetate resin, polyimide resin, fluorine resin, and cellophane; paper such as kraft paper and Japanese paper; a rubber sheet made of natural rubber, butyl rubber, or the like; a foamed sheet obtained by foaming polyurethane, polychloroprene rubber, or the like; metal foil such as aluminum foil and copper foil; and a composite of these. Surface treatment such as corona treatment may be performed on one or both of the surfaces of the release liner.

Examples of the release liner further include: paper obtained by laminating a polyethylene film or the like on glassine paper, kraft paper, or clay coated paper; paper coated with resin such as polyvinyl alcohol or an acrylic acid ester copolymer; and a synthetic resin film that is made of polyester, polypropylene, or the like and coated with a releasing agent such as fluorine resin or silicone resin.

Any one of these may be used alone or two or more of these may be used in combination.

Of these, a paper release liner can be easily teared by hand and thus is preferable, and a release liner made of paper that has a paper weight of 40 to 120 g/m$^2$, or preferably 50 to 80 g/m$^2$ is particularly preferable. The thickness of the release liner is preferably 40 to 180 μm, particularly preferably 60 to 140 μm, and further preferably 80 to 120 um. If the thickness is too small, the production tends to be difficult due to creases being formed when the release liner is wound, for example, and if the thickness is too large, the release liner tends to be difficult to tear by hand.

A commonly used coating device can be used to coat one surface of the substrate or the release liner with the adhesive agent. Examples of the coating device include a roll knife coater, a die coater, a roll coater, a bar coater, a gravure roll coater, a reverse roll coater, a dipping device, and a blade coater.

The thickness of the dried adhesive layer is preferably 5 to 200 μm, more preferably 10 to 150 μm, and further preferably 15 to 130 um.

If the thickness is too large, application of the adhesive agent tends to be difficult, and if the thickness is too small, sufficient adhesiveness is unlikely to be obtained.

The adhesive tape according to the present disclosure may be a one-sided adhesive tape or a double-sided adhesive tape. Adhesive layers of the double-sided adhesive tape may have the same composition or different compositions.

In a case where release liners are respectively layered on the adhesive layers of the double-sided adhesive tape, it is preferable to select the release liners such that the release liners layered on the two surfaces have different peel forces, to improve work efficiency. For example, work efficiency is improved when the release liners are selected such that the peel force of a release liner layered on a surface of the double-sided adhesive tape that is to be attached first is smaller than the peel force of a release liner layered on a surface of the double-sided adhesive tape to be attached next.

Conditions of the drying step described above can be selected such that the solvent and residual monomers in the adhesive agent are dried and removed through the drying and, when the crosslinking agent (B) is used, functional groups contained in the acrylic resin

(A) and the crosslinking agent (B) react with each other to form a crosslinked structure. For example, the drying is preferably performed at 60°C to 120°C for about 1 to 5 minutes. After the drying, it is possible to cause the crosslinking reaction to further proceed by aging the adhesive layer in a state of being sandwiched between sheet-shaped substrates.

The adhesive tape according to the present disclosure may be formed into a roll, a sheet, or various other shapes.

In the case where the adhesive tape is a double-sided adhesive tape in the form of a sheet, it is preferable to provide release liners on the surfaces of both of the two adhesive layers. In the case where the adhesive tape is in the form of a roll, it is preferable to provide a release liner only on the surface of one of the two adhesive layers.

Thus, the adhesive tape according to the present disclosure is obtained. Adhesive properties of the adhesive tape according to the present disclosure are not degraded with respect to even an adherend and a substrate that degrade adhesive properties, and the adhesive tape also has a good holding force. Furthermore, when a substrate that is tearable by hand is used as the substrate film, the adhesive tape can be easily cut by hand at any position in the width direction of the tape without a need to use a tape cutter or the like, and can be used particularly advantageously as an adhesive tape.

Regarding the adhesiveness of the adhesive layer in the adhesive tape, it is typically preferable that the adhesive tape has a 180° peel strength of 1 to 100 N/25 mm in accordance with JIS Z0237 with respect to an adherend used.

In particular, when a test plate made of SUS304 steel, which has relatively high polarity, is used as the adherend, the 180° peel strength is preferably 25 N/25 mm or more, particularly preferably 30 N/25 mm or more, and further preferably 35 N/25 mm or more. Note that the upper limit of the 180° peel strength is typically about 100 N/25 mm.

Note that the adhesiveness varies depending on the composition (material) and surface conditions (surface roughness) of the adherend, treatment (washing) conditions, and the like, and therefore, is not limited to the above-described range of the peel strength.

The adhesiveness is measured in accordance with JIS Z0237. Specifically, the adhesiveness can be measured using a method described later in Examples.

In the case where the test piece is a double-sided adhesive tape, an adhesive surface that is not tested can be covered with a polyethylene terephthalate film (Lumirror S10 manufactured by Toray Industries, Inc.) with a nominal thickness of 25 um specified in JIS C2318 during measurement.

Regarding the holding force of the adhesive layer in the adhesive tape according to the present disclosure, when the holding force is measured using a method described below in <Method for Measuring Holding Force>, specifically a method described later in Examples, it is particularly preferable that the test piece does not fall off from a test plate when 24 hours (1440 minutes) has elapsed, and even if the test piece falls within 24 hours, it is preferable that the test piece is held for 100 minutes or more, more preferably 150 minutes or more, and particularly preferably 500 minutes or more.

<Method for Measuring Holding Force>

The adhesive layer of the adhesive tape cut to have a width of 25 mm and a length of 75 mm and a SUS plate are bonded under pressure such that the area of contact between the adhesive layer and the SUS plate has a width of 25 mm and a length of 25 mm, then a 1000-g weight is attached to the SUS plate such that the adhesive tape is vertically suspended, and the time it takes for the adhesive tape to fall is measured in an environment at 40°C.

Furthermore, the adhesive layer in the adhesive tape preferably has a gel fraction of 30 to 70 wt.%, more preferably 35 to 60 wt.%, and particularly preferably 40 to 50 wt.%, from the viewpoint of adhesiveness and the holding force. If the gel fraction is too low, the holding force with respect to adherends tends to decrease, and if the gel fraction is too high, adhesiveness to adherends tends to decrease. An adhesive composition that has a gel fraction within the preferable range and in which the epoxy crosslinking agent (b1) and the isocyanate crosslinking agent (b2) are used in combination has high adhesiveness and a strong holding force in a well-balanced manner, and is likely to stably maintain the strong holding force even when subjected to a high temperature and a high humidity, and thus is preferable.

The gel fraction serves as an index of a crosslinking degree (the degree of curing), and can be measured using a method described later in Examples, for example.

The gel fraction of the adhesive agent can be adjusted to fall within the above-described range by adjusting the type and the amount of the crosslinking agent (B), for example.

The adhesive tape according to the present disclosure preferably has a high tensile strength, and is required to be strong enough to be stretched so as not to skew when attached to an adherend or the like and to be peeled off to correct its position. The tensile strength of the adhesive tape is preferably 20 N/25 mm or more, more preferably 30 N/25 mm or more, and further preferably 40 N/25 mm or more. The upper limit of the tensile strength is typically 250 N/25 mm. An adhesive tape that has a high tensile strength can be obtained by using a substrate film that has a tensile strength equivalent to or higher than the target tensile strength of the adhesive tape.

The adhesive tape according to the present disclosure is excellent in both adhesiveness and the holding force, while being flame retardant. Therefore, the adhesive tape has a wide variety of uses including packaging tapes such as flame retardant adhesive tape, flame retardant bonding tape, craft paper-backed tape, OPP tape, and cloth adhesive tape, cellophane adhesive tape for light packaging, foamed tape for automobiles, damping sheet, housing curing tape, soundproofing seal, double-sided tape for fixing carpets, vinyl tape for electrical insulation, outdoor anticorrosion tape, indoor display tape, slip prevention tape, airtight waterproof adhesive tape, medical band aid and other patch base, surgical tape, adhesive bandage, tape for electrical and electronic devices, double-sided tape for optical uses, dicing tape for semiconductors, heat conductive tape, heat resistant tape, and electrically conductive tape, for example.

Also, the adhesive tape can be used particularly for construction uses, for example, for a structure of a house, a member of the structure, a space between members, and can be preferably used as an airtight waterproof adhesive tape.

## Examples

The following describes the present disclosure more specifically using examples, but embodiments of the present disclosure are not limited to the following examples as long as such embodiments do not deviate from the gist of the present disclosure. In the examples, "parts" and "%" mean "parts by weight" and "wt.%", respectively.

First, various acrylic resins (A) were prepared as described below.

Note that the weight-average molecular weight, the dispersity, the glass transition temperature, and the viscosity of each acrylic resin (A) were measured using the above-described methods.

<Acrylic Resin (A)>

Prior to the production of the acrylic resins (A), the followings were prepared as copolymerization components (a) to be used in the production.

(a1) component
Acrylic acid
(a2) component
2-hydroxyethylmethacrylate
(a3) component

Terminal end carboxy group-containing monomer represented by the following general formula (2)

$$CH_2{=}CR^1\text{-}CO\text{-}O\text{-}(R^2\text{-}COO\text{-})_nH \cdots \qquad (2)$$

In the general formula (2), $R^1$ is hydrogen, $R^2$ is an ethylene chain, and n is 1 to 5.

(a4-1) component
n-butylacrylate
(a4-2) component
2-ethylhexylacrylate
(a5-1) component
Methylacrylate
(a5-2) component
Vinyl acetate

Note that "SIPOMER H" manufactured by Solvay Nicca, Ltd., was used as the (a3) component.
SIPOMER H is a mixture containing 56% of a compound (a3-1) represented by the above general formula (2) in which $R^1$ is hydrogen, $R^2$ is an ethylene chain, and n=1, 16.1% of a compound (a3-2) represented by the above general formula (2) in which $R^1$ is hydrogen, $R^2$ is an ethylene chain, and n=2 to 5, and 27.9% of acrylic acid (a1) (hereinafter, the compounds contained in SIPOMER H and represented by the general formula (2) in which $R^1$ is hydrogen, $R^2$ is an ethylene chain, and n=1 to 5 may also be referred to as "CAO").

[Production of Acrylic Resin (A-1)]

5 parts of SIPOMER H (3.6 parts of CAO (a3) and 1.4 parts of acrylic acid (a1)), 0.1 parts of 2-hydroxyethylmethacrylate (a2), 25.8 parts of n-butylacrylate (a4-1), 63.1 parts of 2-ethylhexylacrylate (a4-2), 6 parts of methylacrylate (a5-1), which were used as copolymerization components, 55 parts of ethyl acetate used as a solvent, and 0.15 parts of azobisisobutyronitrile used as a polymerization initiator were put into a reaction vessel equipped with a thermometer, a stirrer, and a reflux cooler, the mixture was heated while being stirred, polymerization was allowed to proceed at a reflux temperature of ethyl acetate (mixture) for 7 hours, and then the reacted mixture was diluted with ethyl acetate to obtain an acrylic resin (A-1) solution having a solid content of 56% and a viscosity of 7000 mPa·s/25°C.
The obtained acrylic resin (A-1) had a weight-average molecular weight of 620,000, a dispersity of 5.8, and a glass transition temperature of -59°C.

[Production of Acrylic Resin (A-2)]

0.1 parts of 2-hydroxyethylmethacrylate (a2), 2.9 parts of acrylic acid (a1), 46 parts of n-butylacrylate (a4-1), 46 parts of 2-ethylhexylacrylate (a4-2), 5 parts of vinyl acetate (a5-2), which were used as copolymerization components, 40 parts of ethyl acetate used as a solvent, and 0.1 parts of azobisisobutyronitrile used as a polymerization initiator were put into a reaction vessel equipped with a thermometer, a stirrer, and a reflux cooler, the mixture was heated while being stirred, polymerization was allowed to proceed at a reflux temperature of ethyl acetate (mixture) for 9 hours, and then the reacted mixture was diluted with toluene to obtain an acrylic resin (A-2) solution having a solid content of 45%.
The obtained acrylic resin (A-2) had a weight-average molecular weight of 600,000, a dispersity of 4.8, a viscosity of 7,500 mPa·s/25°C, and a glass transition temperature of -57°C.

<Crosslinking Agent (B)>

The followings were prepared as crosslinking agents (B) .
Epoxy crosslinking agent (b1): TETRAD-C (1,3-bis(N,N'-diglycidyl-aminomethyl)cyclohexane) manufactured by MITSUBISHI GAS CHEMICAL COMPANY, INC.
Isocyanate crosslinking agent (b2): CORONATE L-55E (solid content: 55%) manufactured by Tosoh Corporation

<Flame Retardant (C)>

The following was prepared as a crosslinking agent (C) .
Melamine resin-coated ammonium polyphosphate (II) flame retardant: TERRAJU C-80 manufactured by BUDENHEIM

<Tackifier (D)>

The following was prepared as a tackifier (D).

Disproportionated rosin ester: SUPER ESTER A-100 (glycerin ester of disproportionated rosin having a softening point of 95°C to 105°C) manufactured by ARAKAWA CHEMICAL INDUSTRIES, LTD.

<Example 1>

0.018 parts (in terms of solid content (resin content)) of the epoxy crosslinking agent (b1) (TETRAD-C), 0.29 parts (in terms of solid content (resin content)) of the isocyanate crosslinking agent (b2) (CORONATE L-55E), 24 parts of the flame retardant (C), and 15 parts of the tackifier (D) were mixed with 100 parts (in terms of solid content (resin content)) of the acrylic resin (A) solution prepared as described above, the solid content concentration of the obtained solution was adjusted to 40% using ethyl acetate, the solution was stirred to be uniform, and thus an adhesive composition solution was obtained.

<Examples 2 to 4, Comparative Examples 1 to 4>

Adhesive composition solutions of Examples 2 to 4 and Comparative Examples 1 to 4 were obtained in the same manner as in Example 1, except that the composition of the adhesive composition in Example 1 described above was changed as shown in Table 1 below.

Adhesive tapes were produced using the obtained adhesive compositions of Examples 1 to 4 and Comparative Examples 1 to 4 as described below, and were evaluated as described below. Evaluation results are shown in Table 1 below.

[Production of Adhesive Tape]

The adhesive composition solutions prepared as described above were each applied to a release surface of a paper release liner (SS-70-SBX (manufactured by Shinomura Chemical Industry Co., Ltd.)) using an applicator such that the formed layer had a thickness of 100 um after dried, then the formed layer was dried at 80°C for 5 minutes, and flat yarn (having a thickness of 130 um and manufactured by DIATEX Co., Ltd.) was attached. Thereafter, heat aging treatment was performed in a dryer at 40°C for 7 days, and thus an adhesive tape was produced.

<Gel Fraction>

A 200-mesh SUS wire netting with a size large enough to wrap the obtained adhesive tape was prepared and the weight of the wire netting was measured (1). The paper release liner was removed from the adhesive tape, the adhesive tape was wrapped with the SUS wire netting, and a tape weight was measured in the state where the tape was wrapped with the wire netting (2). After the tape was immersed in toluene kept at 23°C for 48 hours, the tape was sufficiently dried, and a tape weight was measured in the state where the tape was wrapped with the wire netting (3). The immersed tape was taken out from the wire netting, a residual adhesive layer was removed, and then the weight of the substrate was measured (4). The percentage of the weight of the adhesive agent component after immersion relative to the weight of the adhesive agent component before immersion was calculated through subtraction as shown in the following formula, and was taken as the gel fraction.

Gel fraction (wt.%) = (tape weight after immersion (3) including weight of SUS wire netting - weight of substrate (4) - weight of SUS wire netting (1)) / (tape weight before immersion (2) including weight of SUS wire netting - weight of substrate (4) - weight of SUS wire netting (1)) × 100

<180° Peel Strength>

The adhesive tape was cut to have a width of 25 mm and a length of 150 mm, and thus a test piece was obtained. After a surface of a test plate that was made of SUS304 steel and polished with waterproof sandpaper (#360) was washed with ethyl acetate, the test plate was left to stand in an atmosphere of 23°C and 50%RH overnight, and then used as an adherend. The paper release liner was removed from the test piece, and the adhesive layer of the test piece was bonded to the test plate under pressure by moving a 2-kg roller back and forth once at a speed of 5 mm/second on the test piece. The test piece and the test plate bonded under pressure were left to stand in an atmosphere of 23°C and 50%RH for 20 minutes, a free portion of the test piece was folded back at an angle of 180° to peel off the test piece by 30 mm, then the test plate was fixed to a lower chuck of a peel strength test machine and an end of the test piece was fixed to an upper chuck of the test machine in the same atmosphere, and the adhesive tape was peeled off from the adherend at a peeling angle of 180° and a speed of 300 mm/minute to measure the peel strength.

<Holding Force>

The adhesive tape was cut to have a width of 25 mm and a length of 75 mm, and thus a test piece was obtained. After a surface of a test plate that was made of SUS304 steel and polished with waterproof sandpaper (#360) was washed with ethyl acetate, the test plate was left to stand in an atmosphere of 23°C and 50%RH overnight, and then used as an adherend. The test piece was bonded to the test plate under pressure such that the area of contact between the adhesive layer of the test piece from which the paper release liner had been removed and the test plate had a width of 25 mm and a length of 25 mm, by moving a 2-kg roller back and forth once at a speed of 5 mm/second on the test piece. A portion of the test piece in which the adhesive agent was exposed was folded back. The test piece and the test plate bonded under pressure were left to stand in an environment at 23°C and 50%RH for 30 minutes, and then transferred to an environment at 40°C and left to stand for 20 minutes. A 1000-g weight was attached to the test plate such that the test piece was vertically suspended, and the time it took for the test piece to fall was measured in the environment at 40°C. In a case where the test piece did not fall even when 24 hours (1440 minutes) had elapsed, the time was taken as 1440 minutes or more.

<Flame Retardancy (EN13501-1 ISO11925-2)>

The flame retardancy was evaluated using the adhesive tape in accordance with ISO11925-2, which is an ignitability test standard specified in the European construction material fire safety standard EN13501-1. Since the adhesive tape was evaluated alone, whether or not the adhesive tape passed evaluation corresponding to CLASS B/C/D was determined. The evaluation was performed for three items, namely an average burning length (150 mm or less was acceptable), whether or not droplets burned (the absence of burned droplets was acceptable), and the presence or absence of a completely burned sample (the absence of a completely burned sample was acceptable, sample length was 250 mm). If evaluation results of all the items were acceptable, the adhesive tape passed the flame retardancy test, and if an evaluation result of at least one item was not acceptable, the adhesive tape did not pass the flame retardancy test.

<Airtightness and Waterproofness Test>

A test for water penetration resistance around nails was performed using the adhesive tape in accordance with AAMA711-13 5.2. If water penetration was not observed, the adhesive tape passed the test, and if water penetration was observed, the adhesive tape did not pass the test.

Table 1

| | Acrylic resin (A) (parts) | | Epoxy crosslinking agent (b1) (parts) | Isocyanate crosslinking agent (b2) (parts) | Flame retardant (C) (parts) | Tackifier (D) (parts) | Gel fraction (%) | 180° peel strength (N/ 25mm) | Holding force (min.) | Flame retardancy (EN ISO 11925-2) corresponding to Class B/C/D (burning length) | Airtightness and waterproofness test (AAMA711-135.2) |
|---|---|---|---|---|---|---|---|---|---|---|---|
| Ex. 1 | A-1 | 100 | 0.018 | 0.29 | 24 | 15 | 46 | 41.9 | ≥1440 | Passed (123 mm) | Passed |
| Ex. 2 | A-1 | 100 | 0.018 | 0.29 | 59 | 15 | 56 | 38.2 | 160 | Passed (123 mm) | Passed |
| Ex. 3 | A-1 | 100 | 0.018 | 0.29 | 12 | 15 | 42 | 40.6 | ≥1440 | Passed (123 mm) | Passed |
| Ex. 4 | A-2 | 100 | 0.009 | 0.15 | 24 | 0 | 43 | 50.5 | 153 | Passed (140 mm) | Passed |
| Com. Ex. 1 | A-1 | 100 | - | 0.65 | - | 15 | 34 | 46.2 | 1123 | Not passed (210 mm) | Passed |
| Com. Ex. 2 | A-1 | 100 | - | 0.65 | 24 | 15 | 31 | 37.8 | 6 | Not passed (175 mm) | Passed |
| Com. Ex. 3 | A-1 | 100 | 0.028 | - | - | 15 | 34 | 44.9 | 879 | Not passed (240 mm) | Passed |
| Com. Ex. 4 | A-1 | 100 | 0.028 | - | 24 | 15 | 43 | 43.1 | 691 | Not passed (187 mm) | Passed |

According to the results shown in Table 1, the adhesive tapes of Examples of the present disclosure in which the epoxy crosslinking agent (b1) and the isocyanate crosslinking agent (b2) were used in combination had excellent flame retardancy.

In contrast, the flame retardancy was insufficient in Comparative Examples 1 and 2 in which only the isocyanate crosslinking agent (b2) was used as the crosslinking agent (B) and in Comparative Examples 3 and 4 in which only the epoxy crosslinking agent (b1) was used as the crosslinking agent (B). Also, the adhesive tape of Comparative Example 1 in which the flame retardant (C) was not used had a high peel strength and the holding force of the adhesive tape did not decrease significantly. However, the holding force decreased significantly in Comparative Example 2 in which the flame retardant (C) was added.

That is, it can be found that an adhesive tape obtained using an adhesive composition that contains an acrylic resin (A) obtained by copolymerizing copolymerization components (a) including a (meth)acrylic acid monomer (a1) and a hydroxyl group-containing monomer (a2), an epoxy crosslinking agent (b1), an isocyanate crosslinking agent (b2), and a flame retardant (C) is excellent in both adhesiveness and the holding force and have well-balanced adhesive properties, while having excellent frame retardancy.

Also, as for all of the adhesive tapes described above, water penetration was not observed in the test for water penetration resistance around nails in accordance with AAMA. Accordingly, the adhesive tapes can be used for a structure of a house, a member of the structure, a space between members, and the like, and can be preferably used as an airtight waterproof adhesive tape.

Although specific embodiments of the present disclosure are described in the Examples, the Examples are merely examples and should not be construed as limiting the present disclosure.

Industrial Applicability

The adhesive composition according to the present disclosure is excellent in flame retardancy, as well as in both adhesiveness and the holding force. Therefore, the adhesive composition has a wide variety of uses including packaging tapes such as craft paper-backed tape, OPP tape, and cloth adhesive tape, cellophane adhesive tape for light packaging, foamed tape for automobiles, damping sheet, flame retardant adhesive tape, flame retardant bonding tape, housing curing tape, soundproofing seal, double-sided tape for fixing carpets, vinyl tape for electrical insulation, outdoor anticorrosion tape, indoor display tape, slip prevention tape, airtight waterproof adhesive tape, medical band aid and other patch base, surgical tape, adhesive bandage, tape for electrical and electronic devices, double-sided tape for optical uses, dicing tape for semiconductors, heat conductive tape, heat resistant tape, and electrically conductive tape, for example.

## Claims

1. An adhesive composition comprising:

   an acrylic resin (A) that contains a (meth)acrylic acid monomer (a1) unit and a hydroxyl group-containing monomer (a2) unit;
   an epoxy crosslinking agent (b1);
   an isocyanate crosslinking agent (b2); and
   a flame retardant (C).

2. The adhesive composition according to claim 1,

   wherein the acrylic resin (A) contains a terminal end carboxy group-containing monomer (a3) unit represented by the following general formula (1),

$$\begin{array}{l} -(CH_2-\underset{|}{C}R^1)- \\ \qquad\quad CO-O-(R^2-COO-)_nH \quad \cdots \quad (1) \end{array}$$

   where $R^1$ represents hydrogen or a methyl group, $R^2$ represents a divalent saturated aliphatic group, unsaturated aliphatic group, aromatic group, saturated alicyclic group, or unsaturated alicyclic hydrocarbon group, and n represents a positive number of 1 or more.

3. The adhesive composition according to claim 2,
wherein the acrylic resin (A) contains the following monomer units (a1) to (a4):

(a1) 0.1 to 5 wt.% of the (meth)acrylic acid monomer unit;
(a2) 0.01 to 5 wt.% of the hydroxyl group-containing monomer unit;
(a3) 1 to 20 wt.% of the terminal end carboxy group-containing monomer unit represented by the general formula (1); and
(a4) 55 to 97 wt.% of a (meth)acrylate monomer unit having an alkyl group having 4 to 24 carbon atoms.

4. The adhesive composition according to any one of claims 1 to 3,
wherein the flame retardant (C) is contained in an amount of 1 to 100 parts by weight relative to 100 parts by weight of the acrylic resin (A).

5. An adhesive agent obtained by crosslinking the adhesive composition according to any one of claims 1 to 4.

6. An adhesive tape comprising:

a substrate; and
the adhesive agent according to claim 5 applied to the substrate.

7. An airtight waterproof adhesive tape constituted by the adhesive tape according to claim 6.

**Patentansprüche**

1. Klebemittelzusammensetzung, aufweisend:

ein Acrylharz (A), das eine (Meth)acrylsäuremonomer (a1)-Einheit und eine Hydroxylgruppen enthaltende Monomer (a2)-Einheit enthält;
ein Epoxidvernetzungsmittel (b1);
ein Isocyanatvernetzungsmittel (b2); und
ein Flammschutzmittel (C).

2. Klebemittelzusammensetzung nach Anspruch 1,

wobei das Acrylharz (A) eine Monomereinheit (a3) mit endständiger Carboxylgruppe enthält, die durch die folgende allgemeine Formel (1) dargestellt wird,

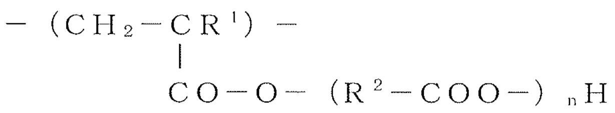

・・・ (1)

wobei $R^1$ Wasserstoff oder eine Methylgruppe darstellt, $R^2$ eine zweiwertige gesättigte aliphatische Gruppe, ungesättigte aliphatische Gruppe, aromatische Gruppe, gesättigte alicyclische Gruppe oder ungesättigte alicyclische Kohlenwasserstoffgruppe darstellt und n eine positive Zahl von 1 oder mehr darstellt.

3. Klebemittelzusammensetzung nach Anspruch 2,
wobei das Acrylharz (A) die folgenden Monomereinheiten (a1) bis (a4) enthält:

(a1) 0,1 bis 5 Gew.-% der (Meth)acrylsäuremonomereinheit;
(a2) 0,01 bis 5 Gew.-% der hydroxylgruppenhaltigen Monomereinheit;
(a3) 1 bis 20 Gew.-% der die endständige Carboxylgruppe enthaltende Monomereinheit,
dargestellt durch die allgemeine Formel (1); und
(a4) 55 bis 97 Gew.-% einer (Meth)acrylat-Monomereinheit mit einer Alkylgruppe mit 4 bis 24 Kohlenstoffatomen.

4. Klebemittelzusammensetzung nach einem der Ansprüche 1 bis 3,
wobei das Flammschutzmittel (C) in einer Menge von 1 bis 100 Gewichtsteilen, bezogen auf 100 Gewichtsteile des

Acrylharzes (A), enthalten ist.

5. Klebemittel, erhalten durch Vernetzen der Klebemittelzusammensetzung nach einem der Ansprüche 1 bis 4.

6. Klebeband, aufweisend:

   ein Substrat; und
   das Klebemittel nach Anspruch 5, das auf das Substrat aufgebracht ist.

7. Luftdichtes, wasserfestes Klebeband, das aus dem Klebeband nach Anspruch 6 besteht.

## Revendications

1. Composition adhésive comprenant :

   une résine acrylique (A) contenant une unité monomère d'acide (méth)acrylique (a1) et une unité monomère contenant un groupe hydroxyle (a2) ;
   un agent de réticulation époxy (b1) ;
   un agent de réticulation isocyanate (b2) ; et
   un retardateur de flamme (C).

2. La composition adhésive selon la revendication 1,

   dans laquelle la résine acrylique (A) contient une unité monomère contenant un groupe carboxy terminal (a3) représentée par la formule générale suivante (1),

   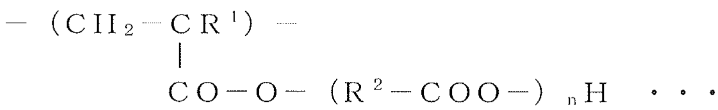 (1)

   où $R^1$ représente l'hydrogène ou un groupe méthyle, $R^2$ représente un groupe aliphatique saturé divalent, un groupe aliphatique insaturé, un groupe aromatique, un groupe alicyclique saturé ou un groupe d'hydrocarbures alicycliques insaturés, et n représente un nombre positif de 1 ou plus.

3. La composition adhésive selon la revendication 2,
   dans laquelle la résine acrylique (A) contient les unités monomères suivantes (a1) à (a4) :

   (a1) 0,1 à 5 % en poids de l'unité monomère d'acide (méth)acrylique;
   (a2) 0,01 à 5 % en poids de l'unité monomère contenant un groupe hydroxyle ;
   (a3) 1 à 20 % en poids de l'unité monomère contenant le groupe carboxy terminal représenté par la formule générale (1) ; et
   (a4) 55 à 97 % en poids d'une unité monomère de (méth)acrylate ayant un groupe alkyle ayant de 4 à 24 atomes de carbone.

4. La composition adhésive selon l'une des revendications 1 à 3,
   dans laquelle le retardateur de flamme (C) est contenu dans une quantité de 1 à 100 parties en poids par rapport à 100 parties en poids de la résine acrylique (A).

5. Agent adhésif obtenu par réticulation de la composition adhésive selon l'une des revendications 1 à 4.

6. Ruban adhésif comprenant :

   un substrat ; et
   l'agent adhésif selon la revendication 5 appliqué au substrat.

7. Ruban adhésif étanche à l'air et à l'eau constitué par le ruban adhésif selon la revendication 6.